# EUROPÄISCHE PATENTSCHRIFT

(11) **EP 2 800 619 B1**
(45) Veröffentlichungstag und Bekanntmachung des Hinweises auf die Patenterteilung: **24.03.2021**
(21) Anmeldenummer: 12729844.6
(22) Anmeldetag: 02.05.2012
(51) Int. Cl.: B01D 45/02, B01D 45/06

(54) **ZYKLONÄHNLICHER SICHTER, INSBESONDERE FÜR DIE ABFALLWIRTSCHAFT**
CYCLONE-LIKE SEPARATOR, IN PARTICULAR FOR WASTE MANAGEMENT
SÉPARATEUR DU TYPE CYCLONE, EN PARTICULIER POUR LA GESTION DES DÉCHETS

(30) Priorität: 07.01.2012 DE 102012000212
(43) Veröffentlichungstag der Anmeldung: 12.11.2014
(73) Patentinhaber: Barnstedt, Dirk, 04571 Rötha (DE)
(72) Erfinder: Barnstedt, Dirk, 04571 Rötha (DE)
(74) Vertreter: Szaunig, Bernd
(86) Internationale Anmeldenummer: PCT/DE2012/000461
(87) Internationale Veröffentlichungsnummer: WO 2013/102451

(56) Entgegenhaltungen:
- EP-A1- 1 787 729
- DE-A1- 4 427 418
- DE-B- 1 049 204
- US-A- 2 643 769
- US-A- 3 006 470
- US-A- 3 240 335
- US-A- 3 397 780
- US-A- 3 923 481
- US-A- 5 409 118

## Beschreibung

Die vorliegende Erfindung befasst sich mit einem zyklonähnlichen Sichter, insbesondere für die Abfallwirtschaft, in dem ein heterogener Materialstrom in seine einzelnen Fraktionen getrennt wird.

Derartige Einrichtungen sind im Stand der Technik aus der DE 298 21 221 U1 unter anderem bekannt. Diese Einrichtung weist eine Gehäusetrommel auf, an der eine Einlassöffnung angeordnet ist, durch die ein Luftstrom mit den zu trennenden Teilen einströmt und entlang der Gehäusetrommelwand gleiten, wenn sie nicht bereits vorher aufgrund ihrer Größe durch die Sieblöcher der Gehäusewand getreten sind. Das heißt, die großflächigen Teile, wie beispielsweise Folien, werden durch den Luftstrom mitgerissen und treten nach einem Umlauf von etwa 270° aus einer an der Trommelwand angeordneten Auswurföffnung als großflächige Teile aus dem Gehäuse heraus. Innerhalb der Gehäusetrommel ist ein dort sogenanntes Zellenrad drehbar angeordnet, das eine Mehrzahl von Schaufeln aufweist, die u.a. eine Regulierung und Abbremsung des Luftstromes bewirken, wodurch die großflächigen mitgerissenen Fraktionen des Materialstromes nur eine vorbestimmte Geschwindigkeit innerhalb der Trommel erreichen, was sich nachteilig auf den Trennungsgrad der zu separierenden Teile auswirkt.

Aus der EP 694 28 273 T2 ist ein Verfahren zur Behandlung von Abfällen offenbart, bei dem der gesamte Materialstrom zunächst in gleichmäßige Teilchen zerkleinert wird und dann in einer Zyklontrenneinheit in drei, schwere, mittel und leichte Materialströme, getrennt werden.

Eine weitere Einrichtung ist im Stand der Technik aus der DE 196 30 472 C2 unter anderem bekannt geworden, die einen Zyklonabscheider zum Abscheiden von staubförmigen Gütern aus Gasströmen mit einem zylindrischen Gehäuseteil offenbart, an dem ein zylindrisches Einlaufgehäuse mit einem Einlaufrohr angeordnet ist. In dem zylindrischen Gehäuseteil sind dort sogenannte Störeinrichtungen an den Wandungen angeordnet, die die Gas-Partikelströmung der einlaufenden Strömung in ihrer laminaren Strömung störend beeinflussen. Unterhalb des zylindrischen Gehäuseteils ist ein trichterförmiger Gehäuseteil angeordnet, dar einen sekundär Luftstrom in den zylindrischen Gehäuseteil einführt, was zu einer Verbesserung der Trennfunktion führt. Oberhalb des trichterförmigen Gehäuseteils ist ein Austragsrohr angeordnet, das im Wesentlichen die gesamte Gasströmung innerhalb des Gehäuses absaugt. Diese Vorrichtung ist jedoch nur für eine Gasreinigung geeignet, bei der kleinere Partikel innerhalb der Gasströmung ausgesondert werden. Für großflächige Materialströmungen ist ein derartiger Zyklonsichter jedoch nicht geeignet.

Ferner ist im Stand der Technik eine Windsichteranlage von Materialien unterschiedlicher spezifischer Gewichte aus einer Materialmischung, wie sie typischerweise bei Materialströmungen in der Abfallwirtschaft vorzufinden sind, bekannt geworden. Diese Druckschrift DE 20 208 001 933 U1 besteht im Wesentlichen aus einer Transporteinrichtung, an deren Ende eine Sichttrommel angeordnet ist, deren Drehachse quer zur Transportrichtung verläuft. Hierbei ist unterhalb der Transporteinrichtung zwischen dem Ende der Transporteinrichtung und der Sichttrommel eine Luftblaseinrichtung angeordnet, die den herab fallenden Materialstrom durchdringt und damit zumindest die leichten Fraktionen des Materialstroms mitreißt. Die Restfraktion des Materialstroms teilt sich dann auf in mittelschwere und schwere Materialien, wobei die mittelschweren Materialien auf der Oberfläche der Sichttrommel landen und weiter abtransportiert werden. Infolge der aus der Lufteinblaseinrichtung ausströmenden Luftströmung werden die leichten und mittelschweren Materialfraktionen durch einen Strömungskanal geführt, an dessen Ende eine Auffangeinrichtung angeordnet ist, wodurch der Materialstrom in schwere, mittelschwere und leichte Materialfraktionen aufgeteilt ist. Als nachteilig an dieser Einrichtung wird es empfunden, dass die Bauweise und Konstruktion einer derartigen Anlage verhältnismäßig lang auszuführen ist, um die einzelnen Elemente zur Trennung des Materialstroms überhaupt wirksam werden zu lassen. Ferner ist der Trennungsgrad zwischen leichten und mittelschweren Materialfraktionen nicht unbedingt gewährleistet.

Eine weitere Vorrichtung ist aus DE4427418 bekannt, wo ebenfalls eine Trennung in leichte Fraktion (20) und schwerere Fraktionen 18 erfolgt. Ein laminarer Austrag der leichten Fraktion und somit eine hohe Reinheit sind bei dieser Konstruktion ebenfalls nicht gewährleistet.

Daher ist es Aufgabe der vorliegenden Erfindung, ein Verfahren und eine Vorrichtung bereitzustellen, die in der Lage ist, den Trennungsgrad eines heterogenen Schüttgutes mit unterschiedlichen Fraktionen in die einzelnen Fraktionen mit hoher Reinheit zu trennen.

Diese Aufgabe wird mit den Merkmalen der Hauptansprüche erfindungsgemäß gelöst. Weitere erfindungsgemäße Merkmale sind den Unteransprüchen zu entnehmen.

Das erfindungsgemäße Verfahren zum Trennen eines heterogenen Materialstroms, vorzugsweise aus der Abfallwirtschaft, in einem Gehäuse, in das eine Gasströmung eingeleitet wird, ist dadurch gekennzeichnet, dass die Gasströmung den Materialstrom mindestens einmal durchdringt und mindestens zeitweise in eine Kreisbahn gelenkt wird, an deren Ende ein Trennvorgang stattfindet, bei dem mindestens eine Gas-Materialströmung mindestens eine S-formähnlichen Linie durchläuft, auf der mindestens eine Fraktion der Gas-Partikelströmung geführt wird.

Die zu diesem Verfahren geeignete erfindungsgemäße Vorrichtung zur Trennung eines heterogenen Materialstroms ist dadurch gekennzeichnet, dass die aus einer Gasaustrittsdüse austretende Gasströmung mindestens zwei Fraktionen des Materialstroms innerhalb eines Gehäuses in Richtung eines zylindrischen Gehäuseteils durchdringt, das mindestens eine Krümmung aufweist, die den Gasstrom in eine vorbestimmte kreisbahnähnliche Richtung lenkt und dabei mindestens teilweise eine Fraktion des Materialstroms mitführt, wobei am Ende der kreisbahnähnlichen Gehäusewand eine Absaugvorrichtung angeordnet ist, die im Eingangsbereich ein gebogenes Umlenkelement aufweist, das die Gasströmung in eine S-formähnliche Bahn (Linie) lenkt.

Dabei ist es vorteilhaft, dass eine Absaugeinrichtung an einem Ort des zylindrischen Gehäuseteils angeordnet ist, der zwischen 60° und 240°, vorzugweise 90° und 210° der kreisformähnlichen Gas-Partikelströmung liegt.

Ferner ist vorgesehen, dass innerhalb des Gehäuses im Bereich des Einlaufs der Gas-Partikelströmung in den zylindrischen Abschnitt des Gehäuses mindestens ein verstellbares Leitblech angeordnet ist, um den Gasstrom in Richtung und Geschwindigkeit einstellen zu können.

Weiterhin ist es vorteilhaft, dass das Ende mindestens eines Fördermittels im Bereich der Eintrittsöffnung des Gehäuses angeordnet ist.

Vorteilhaft ist es ferner, dass das zweite Fördermittel unterhalb des primären Gasstromes angeordnet ist.

Teil des erfindungsgemäßen Verfahrens ist es auch, dass der Materialstrom bei Aufprall auf das einstellbare Leitblech innerhalb des Gehäuses eine Trennung in Mittelschwer- und Leichtgut erfährt, bevor der Gas-Materialstrom in eine Kreisbahn gelenkt wird.

Ferner ist vorgesehen, dass mindestens ein flaches gebogenes Umlenkelement im Bereich der Gasaustrittseinrichtung angeordnet wird, um die Gasströmung in ihrer Richtung zu beeinflussen, um somit den Trennungsgrad zwischen Gas- und Materialströmung zu optimieren.

Im nun Folgenden wird die Erfindung anhand von Zeichnungen im Detail näher erläutert. Es zeigt
- **Figur 1**: eine perspektivische Seitenansicht einer Anlage mit zwei Fördermitteln (10, 10'), zwischen denen die erfindungsgemäße Vorrichtung (1) angeordnet ist;
- **Figur 2**: eine schematische Seitenansicht einer erfindungsgemäßen Vorrichtung (1), der mittels eines Förderbands (10) ein heterogenen Materialstroms (2) aus der Abfallwirtschaft zur Trennung in einzelne Fraktionen (2', 2", 2''') zugeführt wird;
- **Figur 3**: eine schematische Draufsicht auf die Anlage aus Fig. 2 mit zwei Fördermitteln (10, 10'), zwischen denen die Vorrichtung (1) angeordnet ist.

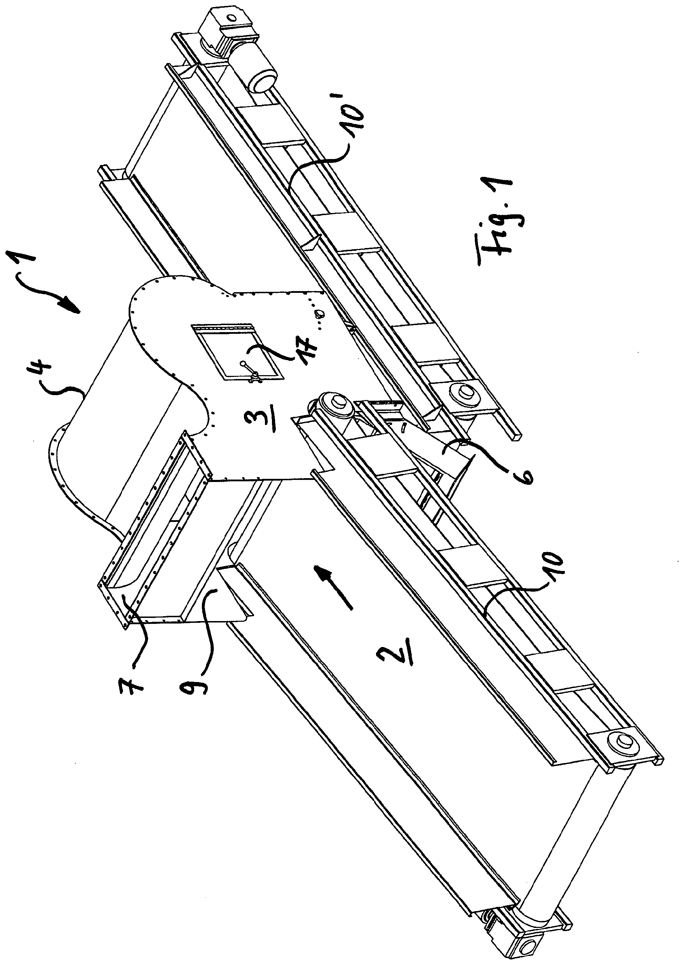

In Fig. 1 wird eine perspektivische Seitenansicht einer Anlage mit zwei Fördermitteln 10, 10' gezeigt, zwischen denen eine erfindungsgemäße Sichtervorrichtung 1 angeordnet ist. Auf dem Fördermittel 10 wird der heterogene Materialstrom 2 in Richtung der Eingangsöffnung des Gehäuses 3 geführt. An dem Gehäuse 3 ist ein Abgaskanal 7 angeordnet, über den die leichten flächigen Fraktionen des Materialstromes abgeführt werden. Die schweren und mittelschweren Fraktionen werden im Innern der Vorrichtung 1 getrennt und zumindest teilweise auf dem darunter liegenden Fördermittel 10' abtransportiert. Zwischen dem oberen Fördermitteln 10 und dem unteren Fördermittel 10' befindet sich mindestens eine Gas-Einblasdüse 6, die die notwendigen Gasmengen zur Trennung der einzelnen Fraktionen des Materialstromes 2 in das Gehäuse 3 einbläst. Seitlich am Gehäuse ist eine Revisionsklappe 17 angeordnet, die auch als Fenster ausgebildet sein kann. Das Besondere an der Vorrichtung 1 ist einerseits der zylinderförmig ausgebildete Teil der Gehäusewand 11, die der Gas-Materialströmung strom eine zyklonähnliche Wirkung verleiht und andererseits die hier nicht sichtbaren Gasströmungs-Umlenkelemente, die den Gasströmungen innerhalb des Gehäuses mindestens zwei nicht geradlinig verlaufende Strömungsrichtungen geben.

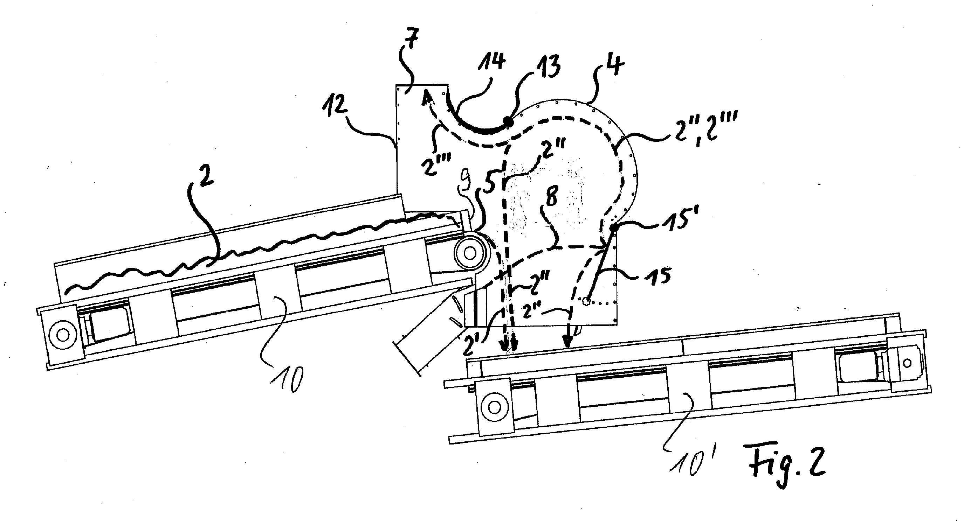

Die Fig. 2 zeigt eine schematische Seitenansicht einer Anlage mit zwei Fördermitteln 10, 10', zwischen denen eine erfindungsgemäße Sichtervorrichtung 1 angeordnet ist. Die Sichtervorrichtung 1 besteht im Wesentlichen aus einem Gehäuse 3, das einen zylindrisch gebogenen Teil 4 aufweist. Am Ende des zylindrisch gebogenen Gehäuseteils 4 ist eine Absaugeinrichtung 12 angeordnet, die das in das Gehäuse 3 eingeblasene Gas durch den Absaugkanal 7 abführt. Der primäre heterogene Materialstrom 2 wird am Ende 5 des Fördermittels 10 dem Gehäuse 3 durch eine Öffnung 9 zugeführt. Unterhalb des Endes 5 des Fördermittels 10 und dem herab fallenden primären heterogenen Materialstrom 2 in das Gehäuse 3 ist eine Gasausströmdüse 6 angeordnet, deren Strömung 8 im Bogen in Richtung des Eintritts in den zylindrischen Teil 4 des Gehäuses 3 gerichtet ist, so dass die leichten und mittelschweren Fraktionen 2", 2''' des heterogenen Materialstroms 2 beim Durchqueren des heterogenen Materialstroms 2 mitgerissen und auf ein einstellbares Strömungsleitelement 15 gelenkt werden, das an einem Gelenk 15' beweglich befestigt ist. Beim Aufprall der leichten 2''' und mittelschweren 2" Fraktionen erfolgt eine weitere Trennung zwischen leichter und mittelschwerer Fraktion des Materialstroms, wobei der mittelschwere Materialstrom 2" in Folge der Schwerkraft und durch den Aufprall auf das Strömungsleitelement 15 und der dadurch gestörten laminaren Strömung herabfällt und somit einem weiteren Fördermittel 10' zugeführt wird. Die leichten Fraktionen 2'" mit einem übrig gebliebenen geringen Restanteil mittelschwerer Fraktionen 2" werden von der primären Gasströmung 8 erfasstund durch die zylinderförmig gebogene Gehäusewand in eine Kreisbahn geführt, in der sie beschleunigt werden. Das Leitelement 15 innerhalb des Gehäuseteils 3 ist verstellbar angeordnet und in einem Ausführungsbeispiel mit einem Scharnier 16 im Bereich des Eingangs des zylindrischen Teils 11 des Gehäuses schwenkbar befestigt. Durch Einstellung des Winkels (α) zwischen Gehäusewand 3 und dem Leitelement 15 wird die Gas-Partikelströmung 2', 2" optimiert, damit die Gas-Partikelströmung keine unnötigen Verwirbelungen erfährt und das Mittelschwergut optimal aussortiert wird. Der erste Trennprozess zwischen Schwergut und leichtem bis mittelschwerem Materialgut findet bereits beim Herabfallen des primären Materialstroms 2 in das Gehäuse 3 statt, weil die Gasströmung das herabfallende Schwergut 2' nur unwesentlich aus seiner Flugbahn ablenkt und somit unmittelbar auf dem darunter liegenden Fördermittel 10' landet. Nachdem die Gas-Partikelströmung 2', 2" auf einer zyklonähnlichen Kreisbahn entlang der zylindrischen Gehäusewand etwa einen Winkel von 130 ° zurückgelegt hat, ist an diesem Ort des kreisförmigen Gehäuseteils 4 eine Absaugeinrichtung 12 angeordnet, die die eingeblasene Gasmenge der Strömung 8 zusammen mit der leichten Fraktionen 2''' wieder absaugt. Beim Absaugvorgang wird die Gas-Partikelströmung mittels mindestens eines verstellbaren Strömungsleitelements 14 in eine S-formähnliche Linienströmung 2''' gebildet und geführt, wodurch ein weiterer Trennungsprozess zwischen leichter 2''' und der restlichen mittelschweren 2" Materialfraktion bewirkt wird. Der Trennprozess beruht auf der Tatsache, dass die mittelschweren Fraktionen 2" infolge der Kreisbewegung so sehr beschleunigt wurden, dass die kinetische Energie der Teilchen zu groß geworden ist, um die mittelschwere Fraktionen 2" durch die Absaugeinrichtung 12 aus ihrer kreisförmigen Flugbahn abzulenken, so dass an diesem Punkt der Kreisbewegung eine Trennung in reine großflächige leichte Fraktionen 2''' und mittelschwere Fraktionen 2" stattfindet. Ein weiteres Strömungsleitelement 19 ist unterhalb des Strömungsleitelementes 14 in mindestens zwei Freiheitsgraden verstellbar angeordnet, um damit eine optimale Strömungsrichtung und Trennung zwischen Materialfraktionen zu erreichen. Weitere Strömungsleitelemente können innerhalb der Absaugeinrichtung 12 angeordnet werden, um den Trennungsgrad und die Strömungsrichtung zu beeinflussen. In der Strömung innerhalb der Absaugeinrichtung 12 sind nunmehr nur die leichtesten Fraktionen 2''', wie beispielsweise Folien aus dem primären heterogenen Materialstrom 2 enthalten, wodurch ein Trennungsgrad zwischen leichten und mittelschweren Fraktionen zwischen 90 und 100 Prozent bei gleicher Ausbringung erreicht werden.

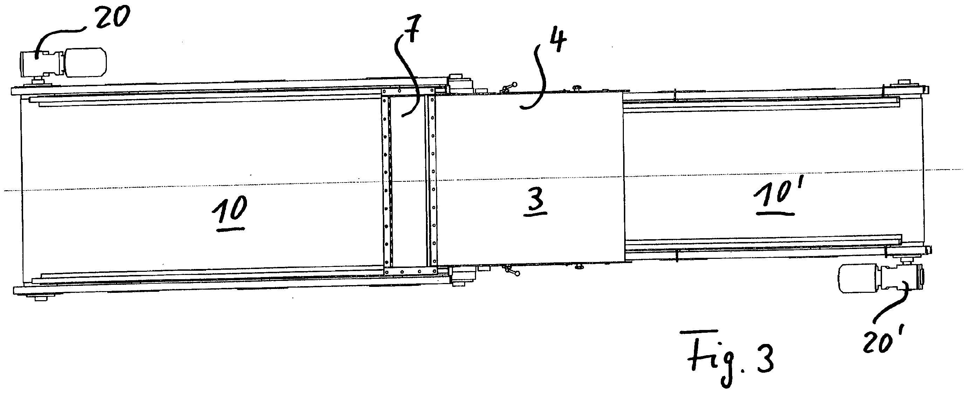

Die Fig. 3 zeigt eine schematische Draufsicht auf die Anlage aus Fig. 2 mit zwei Fördermitteln 10, 10', zwischen denen die Vorrichtung 1 angeordnet ist. Der mindestens eine Absaugkanal 7 erstreckt sich im vorliegenden Ausführungsbeispiel über die gesamte Breite des Gehäuses 3. Der gekrümmte Teil 4 des Gehäuses 3 schließt sich unmittelbar an den Absaugkanal 7 an. Die Fördermittel 10, 10', die als Förderbänder ausgebildet sind, weisen etwa die gleiche Breite wie das Gehäuse 3 und der Absaugkanal 7 auf, was sich günstig auf die gleichmäßige Verteilung des primären heterogenen Materialgutes auswirkt. Die Antriebe 23, 23' der Förderbänder 10, 10' sind aus Gründen der Zweckmäßigkeit jeweils am Ende eines jeden Förderbandes angeordnet.

## Patentansprüche

1. Verfahren zur Trennung eines heterogenen Materialstroms (2) vorzugsweise aus der Abfallwirtschaft, in einem Gehäuse (3), dessen einer Teil (4) zylindrisch ausgebildet ist und aus mindestens einer Gasausströmdüse (6) eine Gasströmung (8) ausströmt, die den heterogenen Materialstrom (2) mindestens einmal durchdringt und dabei mindestens eine Fraktion (2", 2"') des Materialstroms (2) mitreißt, die in Richtung des zylindrisch geformten Gehäuseteils (4) geführt wird und sie kreisbahnähnlich infolge der Krümmung des Gehäuseteils (4) in Richtung mindestens einer Absaugeinrichtung (12) am Ende des zylindrischen Gehäuseteils (4) gelenkt wird, wobei die eingeblasene Gasmenge zusammen mit der leichten Fraktion (2''') abgesaugt wird, **gekennzeichnet durch** die Verwendung nachfolgender Merkmale mit folgenden Verfahrensschritten:
- Lenkung der Gas-Materialströmung (2", 2''') vor Eintritt in das zylindrisch geformte Gehäuseteil (4) auf ein einstellbares Strömungsleitelement (15), wobei beim Aufprall der leichten (2''') und der mittelschweren (2") Fraktionen eine erste Trennung zwischen leichter und mittelschwerer Fraktion erfolgt; und
- beim Absaugvorgang durch die Absaugeinrichtung (12) die Gas-Materialströmung (2''') mittels mindestens eines gebogenen und verstellbaren Strömungsleitelements (14) in eine S-formähnliche Linienströmung (Laminarströmung) geführt wird, wodurch ein weiterer Trennungsprozess zwischen leichter (2''') und der restlichen mittelschweren (2") Materialfraktion bewirkt wird.

2. Verfahren nach Anspruch 1, **dadurch gekennzeichnet, dass** die Absaugvorrichtung (12) tangential im Endbereich der kreisbahnähnlichen Flugbahn der Gas-Materialströmung (2", 2''') angeordnet wird.

3. Verfahren nach Anspruch 1, **dadurch gekennzeichnet, dass** unterhalb des gebogenen Strömungsleitelementes (14) im Eingangsbereich der Absaugeinrichtung (12) ein weiteres Strömungsleitelement (19) angeordnet wird.

4. Verfahren nach Anspruch 1, **dadurch gekennzeichnet, dass** die Absaugeinrichtung (12) an einem Ort des zylindrischen Gehäuseteils (4) im Bereich zwischen einer Bewegung von 60 ° bis 240 °, vorzugsweise zwischen 90 ° bis 210 ° entlang des zylindrischen Gehäuseteils (4) der Gas-Materialströmung (2", 2''') an der gekrümmten Gehäusewand angeordnet wird.

5. Vorrichtung (1) zur Trennung eines heterogenen Materialstroms (2) vorzugsweise aus der Abfallwirtschaft, in einem Gehäuse (3), dessen einer Teil (4) zylindrisch ausgebildet ist und mindestens eine Gasausströmdüse (6) und mindestens eine Absaugeinrichtung (12) aufweist und die aus der mindestens einen Gasausströmdüse (6) austretende Gasströmung (8) die Materialströmung (2) mindestens einmal durchdringt und Materialfraktionen (2", 2''') mitreißt und sie in Richtung einer zylindrisch geformten Gehäusewand führt, die den Gas-Materialstrom (2", 2''') in eine vorbestimmte Richtung lenkt und sie kreisbahnähnlich infolge der Krümmung der Gehäusewand in Richtung mindestens einer Absaugeinrichtung (12) lenkt, **dadurch gekennzeichnet, dass**
- innerhalb des Gehäuses (3) im Bereich der Gas-Materialströmung (2", 2''') mindestens ein verstellbares Leitblech (15) angeordnet ist, das mindestens eine Gas-Materialströmung (2", 2''') in Richtung und Geschwindigkeit einstellt, bevor sie in eine Kreisbahn (4) gelenkt wird; und
- an einer vorbestimmten Stelle (13) des zylindrischen Gehäuseteils (4) mindestens ein gebogenes und verstellbares Strömungsleitelement (14) angeordnet ist, das die Gas-Materialströmung (2''') zumindest in der Nähe eines Absaugkanals (7) in seiner Richtung und Geschwindigkeit so beeinflusst, dass beim Absaugvorgang die Gas- Partikelströmung mittels mindestens eines verstellbaren Strömungsleitelements (14) in eine S-formähnliche Linienströmung 2''' gebildet und geführt wird, wodurch ein weiterer Trennungsprozess zwischen leichter 2''' und der restlichen mittelschweren 2" Materialfraktion bewirkt wird.

6. Vorrichtung nach Anspruch 5, **dadurch gekennzeichnet, dass** die Absaugeinrichtung (12) an einem Ort des zylindrischen Gehäuseteils (11) im Bereich zwischen einer Bewegung von 60 ° bis 240 °, vorzugsweise zwischen 90 ° bis 210° entlang des zylindrischen Gehäuseteils (4) der Gas-Materialströmung (2", 2''') an der gekrümmten Gehäusewand angeordnet ist.

7. Vorrichtung nach einem der vorangegangenen Ansprüche, **dadurch gekennzeichnet, dass** das Ende (5) des mindestens einen Fördermittels (10) im Bereich der Eintrittsöffnung (9) des Gehäuses (3) angeordnet ist.

8. Vorrichtung nach einem der vorangegangenen Ansprüche, **dadurch gekennzeichnet, dass** mindestens ein Fördermittel (10') unterhalb des Gasstroms (8) angeordnet ist.

9. Vorrichtung nach einem der vorangegangenen Ansprüche, **dadurch gekennzeichnet, dass** das Gehäuse (3) mindestens eine Revisionsklappe (17) aufweist.

## Claims

1. A method for separating a heterogeneous material flow (2), preferably from waste management, in a housing (3), one part (4) of which is cylindrical and a gas flow (8) flows out of at least one gas discharge nozzle (6), which flows out of the heterogeneous Material flow (2) penetrates at least once and thereby at least one fraction (2 ", 2''') of the material flow (2) is carried away, which is guided in the direction of the cylindrically shaped housing part (4) and resembles a circular path due to the curvature of the housing part (4) is directed in the direction of at least one suction device (12) at the end of the cylindrical housing part (4), whereby the amount of gas blown in is sucked off together with the light fraction (2 '''), **characterized by** the use of the following features with the following process steps:
- direction of the gas-material flow (2 ", 2 ''') before entering into the cylindrically shaped housing part (4) onto an adjustable flow guide element (15), whereby the light (2' ") and the medium (2 ") Fractions a first separation between light and medium fraction takes place; and
- during the suction process through the suction device (12), the gas-material flow (2 ''') is guided into an S-shaped line flow (laminar flow) by means of at least one curved and adjustable flow guide element (14), whereby a further separation process between lighter (2' ") and the remaining medium-heavy (2 ") material fraction.

2. The method according to claim 1, **characterized in that** the suction device (12) is arranged tangentially in the end area of the orbit-like trajectory of the gas-material flow (2 ', 2").

3. The method according to claim 1, **characterized in that** below the curved flow guide element (14) in the entrance area of the suction device (12) a further flow guide element (19) is arranged.

4. The method according to claim 1, **characterized in that** the suction device (12) at a location of the cylindrical housing part (4) in the range between a movement of 60 ° to 240 °, preferably between 90 ° to 210 ° along the cylindrical housing part (4) the gas-material flow (2 ", 2''') is arranged on the curved housing wall.

5. Device (1) for separating a heterogeneous material flow (2), preferably from waste management, in a housing (3), one part (4) of which is cylindrical and has at least one gas discharge nozzle (6) and at least one suction device (12) and the gas flow (8) emerging from the at least one gas discharge nozzle (6) penetrates the material flow (2) at least once and entrains material fractions (2 ", 2 ''') and guides them in the direction of a cylindrically shaped housing wall which carries the gas Directs material flow (2 ", 2 ''') in a predetermined direction and directs it like a circular path due to the curvature of the housing wall in the direction of at least one suction device (12), **characterized in that**
- within the housing (3) in the region of the gas-material flow (2 ", 2" ") at least one adjustable baffle (15) is arranged, which at least one gas-material flow (2", 2 ''') in Sets direction and speed before it is steered into a circular path (4); and
- at a predetermined point (13) of the cylindrical housing part (4) at least one curved and adjustable flow guide element (14) is arranged, which the gas-material flow (2 ''') at least in the vicinity of a suction channel (7) in its direction and speed is influenced so that during the suction process the gas-particle flow is formed and guided into an S-shaped line flow 2 ''' by means of at least one adjustable flow guide element (14), whereby a further separation process between light 2''' and the remaining medium 2" material fraction is effected.

6. The device according to claim 5, **characterized in that** the suction device (12) at a location on the cylindrical housing part (11) in the range between a movement of 60 ° to 240 °, preferably between 90 ° to 210 ° along the cylindrical housing part (4) the gas-material flow (2 ", 2''') is arranged on the curved housing wall.

7. Device according to one of the preceding claims, **characterized in that** the end (5) of the at least one conveying means (10) is arranged in the region of the inlet opening (9) of the housing (3).

8. Device according to one of the preceding claims, **characterized in that** at least one conveyor (10 ') is arranged below the gas flow (8).

9. Device according to one of the preceding claims, **characterized in that** the housing (3) has at least one inspection flap (17).

## Revendications

1. Procédé de séparation d'un flux de matière hétérogène (2), de préférence de la gestion des déchets, dans un boîtier (3) dont une partie (4) est cylindrique et un flux de gaz (8) s'écoule d'au moins une décharge de gaz qui sort de la buse (6), et pénètre au moins une fois le flux de matière hétérogène (2) et ainsi emporte au moins une fraction (2", 2''') du flux de matière (2), qui est guidée dans la direction de la partie de boîtier de forme cylindrique (4) et ressemble à un trajet circulaire en raison de la courbure de la partie de boîtier (4), est dirigé dans la direction d'au moins un dispositif d'aspiration (12) à l'extrémité de la partie de boîtier cylindrique (4), dans lequel la quantité de gaz insufflé est aspirée avec la fraction légère (2'''), **caractérisée par** l'utilisation des caractéristiques suivantes avec les étapes de procédé suivantes:
- direction du flux gaz-matière (2", 2''') avant d'entrer dans la partie de boîtier de forme cylindrique (4) sur un élément de guidage d'écoulement (15) réglable, où à l'impact la fraction légère ((2''') et moyenne (2") une première séparation entre la fraction légère et moyenne a lieu; et
- pendant le processus d'aspiration à travers le dispositif d'aspiration (12), le flux gaz-matière (2''') est guidé dans un flux de ligne en forme de S (flux laminaire) au moyen d'au moins un élément de guidage de flux incurvé et réglable (14), moyennant quoi un autre processus de séparation entre la fraction de matière plus légère (2''') et la fraction de matière moyenne-lourde restante (2").

2. Procédé selon la revendication 1, **caractérisé en ce que** le dispositif d'aspiration (12) est disposé tangentiellement dans la zone d'extrémité de la trajectoire en orbite du flux gaz-matière (2', 2").

3. Procédé selon la revendication 1, **caractérisé en ce qu'un** autre élément de guidage d'écoulement (19) est disposé sous l'élément de guidage d'écoulement courbe (14) dans la zone d'entrée du dispositif d'aspiration (12).

4. Procédé selon la revendication 1, **caractérisé en ce que** le dispositif d'aspiration (12) à un emplacement de la partie cylindrique du boîtier (4) dans l'intervalle entre un mouvement de 60 ° à 240 °, de préférence entre 90 ° et 210 ° le long la partie de boîtier cylindrique (4), le flux de matière gazeuse (2", 2''') est disposé sur la paroi courbe du boîtier.

5. Dispositif (1) de séparation d'un flux de matière hétérogène (2), de préférence de la gestion des déchets, dans un boîtier (3) dont une partie (4) est cylindrique et comporte au moins une buse d'évacuation des gaz (6) et en au moins un dispositif d'aspiration (12) et le flux de gaz (8) émergeant de l'au moins une buse de décharge de gaz (6) pénètre dans le flux de matière (2) au moins une fois et entraîne des fractions de matière (2", 2''') et les guide dans la direction d'une paroi de boîtier de forme cylindrique, qui transporte le le flux de matière (2", 2''') dans une direction prédéterminée et le dirige comme un trajet circulaire en raison de la courbure de la paroi du boîtier en direction d'au moins un dispositif d'aspiration (12), **caractérisé en ce que**
- à l'intérieur du boîtier (3) au niveau du flux gaz-matière (2", 2''') au moins un déflecteur réglable (15) est disposé, dont au moins un flux gaz-matière (2", 2''') dans définit la direction et la vitesse avant qu'il ne soit dirigé dans une trajectoire circulaire (4); et
- en un point prédéterminé (13) de la partie de boîtier cylindrique (4) est disposé au moins un élément de guidage d'écoulement incurvé et réglable (14), lequel le flux gaz-matière (2''') au moins au voisinage d'un canal d'aspiration (7) dans sa direction et la vitesse est influencée de telle sorte que pendant le processus d'aspiration, le flux de particules de gaz est formé et guidé dans une ligne en forme de S flux (2''') au moyen d'au moins un élément de guidage de débit réglable (14), par lequel un autre processus de séparation entre la fraction de matière légère (2''') et le milieu restant (2") est effectué.

6. Dispositif selon la revendication 5, **caractérisé en ce que** le dispositif d'aspiration (12) à un emplacement de la partie cylindrique du boîtier (11) dans la plage comprise entre un mouvement de 60 ° à 240 °, de préférence entre 90 ° et 210 ° le long de la partie de boîtier cylindrique (4), l'écoulement de matière gazeuse (2", 2''') est disposé sur la paroi incurvée du boîtier.

7. Dispositif selon l'une des revendications précédentes, **caractérisé en ce que** l'extrémité (5) d'au moins un moyen de transport (10) est disposée au niveau de l'ouverture d'entrée (9) du boîtier (3).

8. Dispositif selon l'une des revendications précédentes, **caractérisé en ce qu'**au moins un convoyeur (10') est disposé en dessous du flux de gaz (8).

9. Dispositif selon l'une des revendications précédentes, **caractérisé en ce que** le boîtier (3) comporte au moins un volet d'inspection (17).
